# EUROPEAN PATENT SPECIFICATION

(11) **EP 4 646 910 B1**
(45) Date of publication and mention of the grant of the patent: **22.07.2026**
(21) Application number: 25167879.3
(22) Date of filing: 02.04.2025
(51) Int. Cl.: A01D 34/66, A01D 34/685, A01D 34/71, A01D 34/78, A01D 34/81

(54) **MOWER**
MÄHER
TONDEUSE

(30) Priority: 26.04.2024 CN 202410518762; 13.02.2025 CN 202510158506; 12.03.2025 CN 202520431757 U
(43) Date of publication of application: 12.11.2025
(73) Proprietor: Nanjing Chervon Industry Co., Ltd., Nanjing, Jiangsu 211106 (CN)
(72) Inventor: YAMAOKA, Toshinari, Nanjing (CN); DAI, Cheng, Nanjing (CN); WANG, Hao, Nanjing (CN)
(74) Representative: Sun, Yiming

(56) References cited:
- US-A- 4 064 680
- US-A1- 2021 329 836
- US-A1- 2022 124 976
- US-A1- 2024 114 828
- US-B2- 8 539 745
- US-B2- 9 093 868

## Description

### TECHNICAL FIELD

The present application relates to an outdoor garden power tool and, in particular, to a mower.

### BACKGROUND

A mower is a common mowing device with high efficiency, which is easy to operate. When mowing or trimming the lawn, the mower is required. The mower is also referred to as a weeder, a grass mower, a lawn trimmer, or the like. The mower is formed by a chassis, an electric motor, a traveling mechanism, a cutting part, and an operating device. An engine is mounted on the chassis, the cutting part is mounted on the output shaft of the engine, and the engine drives the cutting part to rotate at a high speed to perform a mowing operation. US 8,539,745 B2 discloses a dual-blade walk-behind mower with co-rotating blades of the same type as the claimed invention, generating a single merged clipping stream directed toward one side of the cutting chamber.

To improve the mowing efficiency, the mower may be provided with two or more cutting parts arranged side by side or non-coaxially to increase the cutting amount per unit time. For the mower with two cutting parts, the side grass outlet and/or the grass outlet are both located within one cutting deck. Therefore, higher requirements are placed on the grass discharge capability of the mower.

This part provides background information related to the present application, and the background information is not necessarily the existing art.

### SUMMARY

An object of the present application is to solve or at least alleviate part or all of the preceding problems. Therefore, an object of the present application is to provide a stand-on mower with a strong driving force that moves uphill stably.

To achieve the preceding object, the present application provides a mower according to claim 1. Preferred embodiments are provided in the dependent claims.

### BRIEF DESCRIPTION OF THE DRAWINGS

FIG. 1 is a schematic view of a push mower as an example of the present application.
FIG. 2 is a schematic view of a mower deck of a mower as an example of the present application.
FIG. 3 is a schematic view of an airflow direction of a mower as an example of the present application.
FIG. 4 is a schematic view illustrating that a flow guide member and a mower deck of a mower are integrated as an example of the present application.
FIG. 5 is a sectional view taken along A-A in FIG. 4.
FIG. 6 is another schematic view of a mower deck of a mower as an example of the present application.
FIG. 7 is a sectional view taken along B-B in FIG. 6.
FIG. 8 is a schematic view of a flow guide member of a push mower as an example of the present application.
FIG. 9 is a front view of a flow guide member of a mower as an example of the present application.
FIG. 10 is a schematic view of a mower deck of a mower as another example of the present application.
FIG. 11 is a schematic view of a mower deck of a mower as another example of the present application from another perspective.
FIG. 12 is a schematic view of an airflow direction of a mower as another example of the present application.
FIG. 13 is a schematic view of a flow direction of grass clippings in a mower as another example of the present application.
FIG. 14 is a schematic view of another perspective of a mower deck in a mower as another example of the present application;
FIG. 15 is a partially enlarged schematic view of a mower deck in a mower as another example of the present application;
FIG. 16 is a bottom view of a mower deck in a mower as another example of the present application;
FIG. 17 is a partially enlarged schematic view of another perspective of a mower deck in a mower as another example of the present application;
FIG. 18 is a schematic view of another perspective of FIG. 17;
FIG. 19 is a structural schematic view of a block in a mower as another example of the present application;
FIG. 20 is a schematic view of a riding mower as an example of the present application.

### DETAILED DESCRIPTION

Before any example of the present application is explained in detail, it is to be understood that the present application is not limited to its application to the structural details and the arrangement of components set forth in the following description or illustrated in the preceding drawings.

In the present application, the term "comprising", "including", "having", or any other variant thereof is intended to encompass a non-exclusive inclusion so that a process, method, article, or device that includes a series of elements not only includes those elements but also includes other elements that are not expressly listed or elements that are inherent to the process, method, article, or device. Without further limitations, an element defined by the phrase "comprising a ..." does not preclude the presence of additional identical elements in a process, method, article, or device including the element.

In the present application, the term "and/or" is used for describing the association relationship between associated objects, which means that three types of relationships may exist. For example, A and/or B may indicate that A exists alone, A and B exist simultaneously, and B exists alone. In addition, the character "/" in the present application generally indicates the "and/or" relationship between the associated objects before and after the character "/".

In the present application, the term "connected", "joined", "coupled", or "mounted" may refer to directly connected, joined, coupled, or mounted or indirectly connected, joined, coupled, or mounted. For example, direct connection means that two members or assemblies are connected together without intermediate members, and indirect connection means that two members or assemblies are separately connected to at least one intermediate member and the two members or assemblies are connected to each other by the at least one intermediate member. Additionally, "connected" or "coupled" is not limited to physically or mechanically connected or coupled and may include electrically connected or coupled.

In the present application, it is to be understood by those of ordinary skill in the art that a relative term (such as "about", "approximately", or "basically") used in conjunction with a quantity or a condition includes a stated value and has a meaning dictated by the context. For example, the relative term includes at least a degree of error associated with the measurement of a particular value, a tolerance caused by manufacturing, assembly, and usage and associated with the particular value, and the like. Such a relative term should also be considered as disclosing the range defined by the absolute values of the two endpoints. The relative term may refer to that an indicated value is added or reduced by a certain percentage (such as 1%, 5%, 10%, or more). A value not modified by the relative term is also to be disclosed as a particular value with a tolerance. Additionally, when used for expressing a relative angular position relationship (for example, basically parallel or basically perpendicular), "basically" may refer to that an indicated angle is added or reduced by a certain degree (such as 1 degree, 5 degrees, 10 degrees, or more).

In the present application, those of ordinary skill in the art will understand that a function implemented by an assembly may be implemented by one assembly, multiple assemblies, one part, or multiple parts. Similarly, a function implemented by a part may be implemented by one part, one assembly, or a combination of multiple parts.

In the present application, the terms "up", "down", "left", "right", "front", "rear", and other orientation words are described based on the orientation or positional relationship shown in the drawings and should not be understood as limitations to the examples of the present application. In addition, in the context, it is to be understood that when an element is connected "above" or "below" another element, the element can not only be directly connected "above" or "below" the other element but can also be indirectly connected "above" or "below" the other element through an intermediate element. It is also to be understood that the directional words such as the upper side, lower side, left side, right side, front side, and rear side not only represent perfect orientations but can also be understood as lateral orientations. For example, the lower side may include directly below, bottom left, bottom right, front bottom, and rear bottom.

A wheeled working tool is driven by wheels and uses an electric motor as a driving member to drive a functional piece to perform corresponding work, such as a wheeled electric mower, a snow thrower, or a road sweeper.

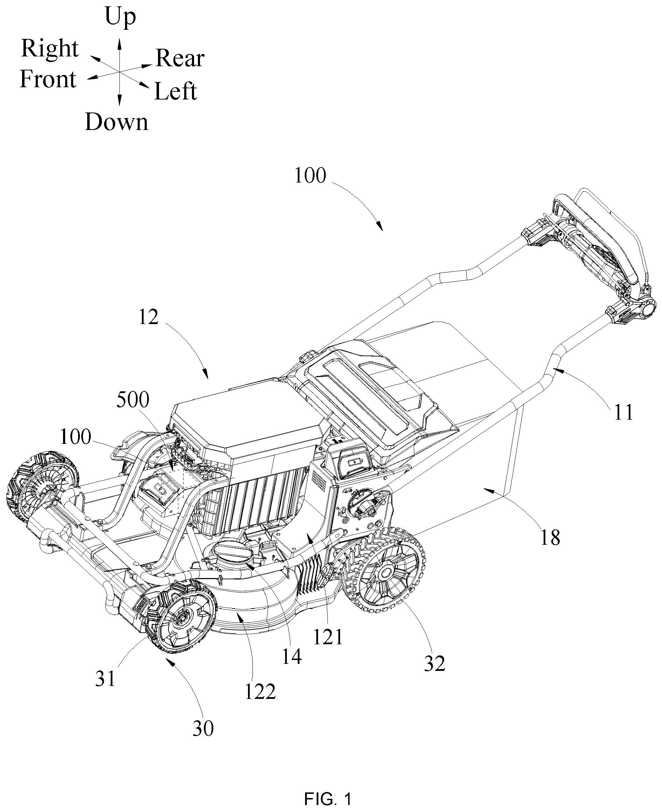

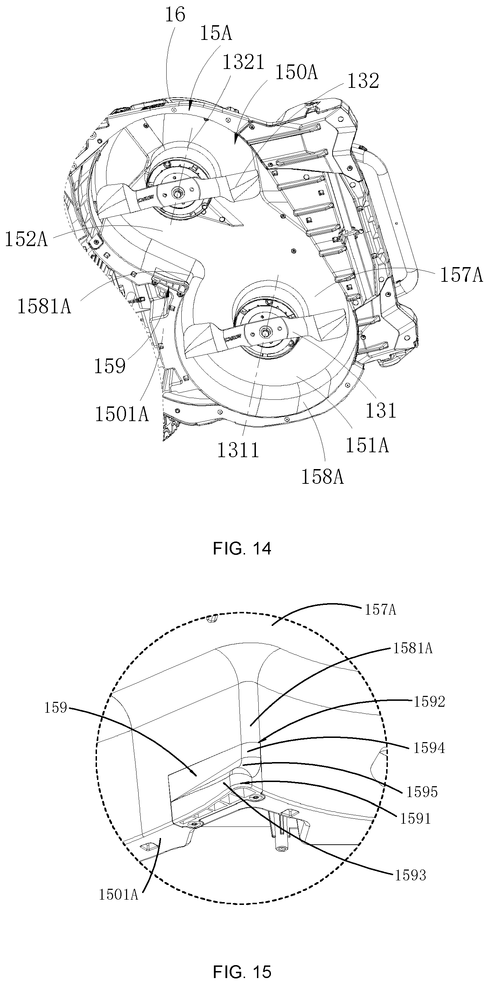

A mower 100 shown in FIGS. 1 and 14 is used for the user to cut grass in a lawn, for example, the lawn of a garden or a golf course. The grass in the lawn requires regular care and thus needs to be often cut with the mower 100. In this example, the mower 100 is a walk-behind working machine. When operating the mower 100, the user stands behind the mower 100 and pushes the mower 100 to travel on the ground.

As shown in FIGS. 1 to 13, the mower 100 includes a handle assembly 11 and a body 12. The user holds the handle assembly 11 to operate the mower 100. The body 12 includes a housing assembly 121 and a chassis 122. The handle assembly 11 is rotatably connected to the housing assembly 121. To facilitate the description of technical solutions, front, rear, left, right, up, and down are defined as shown in FIG. 1.

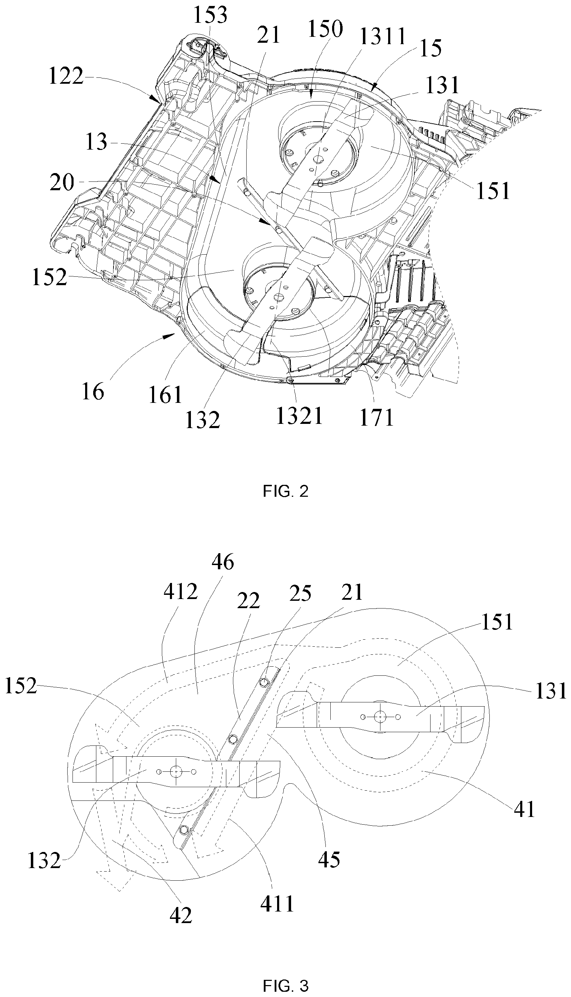

As shown in FIGS. 1 and 2, the mower 100 further includes a traveling wheel set 30, a cutting assembly 13, and a drive assembly 14. The traveling wheel set 30 includes a front traveling wheel set 31 and a rear traveling wheel set 32 that are used for supporting the mower 100 to travel on the ground. The front traveling wheel set 31 includes at least two traveling wheels located on the left and right sides. The rear traveling wheel set 32 includes at least two traveling wheels located on the left and right sides. It is to be understood that the front traveling wheel set 31 may further include more traveling wheels, for example, four, six, or more traveling wheels. The rear traveling wheel set 32 may further include more traveling wheels, for example, four, six, or more traveling wheels. Multiple traveling wheels in the front traveling wheel set 31 and the rear traveling wheel set 32 form a support plane. It is to be understood that the support plane is parallel to the ground on which the mower 100 is located. A horizontal flat ground is used as an example, and the support plane is parallel to the horizontal plane.

A mower deck 15 has a cutting chamber 150 that is open downward. The mower 100 further includes a grass discharge passage 17, an end of the grass discharge passage 17 is connected to the cutting chamber 150, and the other end of the grass discharge passage 17 includes a grass outlet 171 disposed at the rear end of the mower 100. In this example, the cutting chamber 150 is formed with at least one grass outlet 171. In this example, the mower deck 15 is formed on or connected to the chassis 122.

The cutting assembly 13 is used for implementing a cutting function and includes a first blade 131 and a second blade 132 that are adjacently arranged along a configuration direction. In this example, the configuration direction is the left and right direction of the mower 100. It is to be understood that the left and right direction includes not only the perfect direction but also the lateral direction. For example, the first blade 131 is on the upper left side or upper right side of the second blade 132. In other examples, the configuration direction may be the front and rear direction of the mower 100. The drive assembly 14 is used for driving the cutting assembly 13 to rotate and includes a first electric motor (not shown) and a second electric motor (not shown). The first electric motor is used for controlling the rotation of the first blade 131, and the second electric motor is used for controlling the rotation of the second blade 132. The mower deck 15 is formed with the cutting chamber 150 for accommodating at least part of the cutting assembly 13. A first cutting deck 151 and a second cutting deck 152 are disposed in the cutting chamber 150. The first blade 131 is at least partially disposed in the first cutting deck 151, and the second blade 132 is at least partially disposed in the second cutting deck 152. Optionally, each of the first blade 131 and the second blade 132 may have a dimension of 390 mm. Optionally, each of the first blade 131 and the second blade 132 may have a dimension of 376 mm. In addition, the first blade 131 and the second blade 132 may have other dimensions. Alternatively, the dimension of the first blade 131 is different from the dimension of the second blade 132. The dimension of the first blade 131 and the dimension of the second blade 132 are not limited in the present application.

Optionally, the mower 100 may have a cutting dimension of 760 mm. Optionally, the mower 100 may have a cutting dimension of 748 mm. In addition, the mower 100 may have other cutting dimensions. The cutting dimension of the mower 100 is not limited in the present application. The cutting dimension of the mower 100 refers to the cutting width of the mower 100, that is, the cutting width of the mower 100 in operation.

In some examples, the first electric motor drives the first blade 131 to rotate about the first rotation center line 1311, the second electric motor drives the second blade 132 to rotate about the second rotation center line 1321, and the first electric motor and the second electric motor have the same direction of rotation so that the direction of rotation of the driven first blade 131 is the same as the direction of rotation of the driven second blade 132. When the direction of rotation of the first electric motor is clockwise, the direction of rotation of the second electric motor is clockwise. Alternatively, when the direction of rotation of the first electric motor is counterclockwise, the direction of rotation of the second electric motor is counterclockwise.

In other alternative examples, in some examples, the direction of rotation of the first electric motor is opposite to the direction of rotation of the second electric motor so that the direction of rotation of the driven first blade 131 is opposite to the direction of rotation of the driven second blade 132. When the direction of rotation of the first electric motor is clockwise, the direction of rotation of the second electric motor is counterclockwise. Alternatively, when the direction of rotation of the first electric motor is counterclockwise, the direction of rotation of the second electric motor is clockwise.

As shown in FIG. 2, the mower 100 further includes a side discharge assembly 16. The side discharge assembly 16 is connected to the second cutting deck 152 to implement a grass discharge function. The second electric motor may control the second blade 132 to move grass clippings in the second cutting deck 152 into the side discharge assembly 16, thereby discharging the grass. The mower 100 further includes a side discharge cover plate 161 disposed between the second cutting deck 152 and the side discharge assembly 16. Before the mower 100 implements the grass discharge function by using the side discharge assembly 16, the side discharge cover plate 161 needs to be opened so that the second cutting deck 152 connects with the side discharge assembly 16.

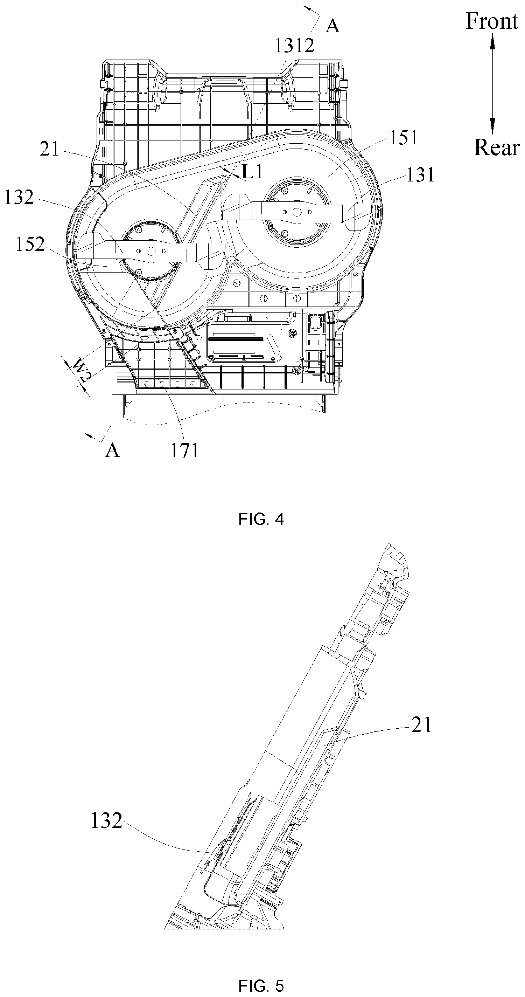

In some examples, as shown in FIGS. 2 and 5, an end of the grass discharge passage 17 is connected to the second cutting deck 152, and the other end of the grass discharge passage 17 includes the grass outlet 171 disposed at the rear end of the mower 100. In some examples, the grass outlet 171 is located on a side of the cutting chamber 150 where the second blade 132 is disposed. The first electric motor controls the first blade 131 to move the grass clippings in the first cutting deck 151 into the second cutting deck 152 through a connecting region 153. The second electric motor controls the second blade 132 to move the grass clippings in the second cutting deck 152 into the grass discharge passage 17. The grass discharge passage 17 is used for guiding the grass clippings from the second cutting deck 152 to the grass outlet 171.

The mower 100 further includes a rear discharge baffle. The rear discharge baffle is disposed at a first end 23 of the grass discharge passage 17 connected to the second cutting deck 152. Before the mower 100 implements a rear grass discharge function through the grass discharge passage 17, the rear discharge baffle needs to be opened to implement the communication of the grass discharge passage 17. The mower 100 further includes a grass collecting basket 18 connected to the body 12. When the mower 100 implements the rear grass discharge function, the grass clippings coming out through the grass discharge passage 17 may be thrown into the grass collecting basket 18.

To improve the mowing efficiency, the mower 100 may be provided with two or more blades arranged side by side or non-coaxially to increase the cutting amount per unit time, placing higher requirements on the grass discharge capability of the mower 100. For the mower 100 with two cutting parts, the side grass outlet and/or the grass outlet 171 are both located within the second cutting deck 152. During grass discharge, the grass outlet 171 becomes a notch in the second cutting deck 152 so that the air pressure in the second cutting deck 152 is lower than the air pressure in the first cutting deck 151, and the grass clippings enter the second cutting deck 152 from the first cutting deck 151. Since part of the grass in the first cutting deck 151 has not been completely cut or a large amount of cut grass in the first cutting deck 151 enters the second cutting deck 152, the cutting pressure on the second blade in the second cutting deck 152 is very high, the load on the electric motor increases accordingly, and thus the grass discharge pressure increases, easily leading to a locked rotor.

To improve the preceding problem, in an example, as shown in FIGS. 2 to 6, the mower deck 15 is formed with or connected to a flow guide member 20, and the flow guide member 20 has a first end 23 facing the grass outlet 171 and a second end 24 facing away from the grass outlet 171 in the extension direction of the flow guide member 20. The first end 23 and the second end 24 are located on two sides of a first plane 111, respectively, and the first plane 111 is defined as a plane that passes through the first rotation center line 1311 of the first blade 131 and the second rotation center line 1321 of the second blade 132 and is perpendicular to the support plane.

The mower deck 15 is formed with or connected to the flow guide member 20 so that the first grass clippings cut by the first cutting deck 151 are split when entering the second cutting deck 152 (the side where the grass outlet 171 is located). The first part of grass clippings (the part with a flow direction consistent with the flow direction of grass clippings in the second cutting deck 152) merges with the second grass clippings in the second cutting deck 152, and the second part of grass clippings directly enters the grass outlet 171. The grass clippings collected by the second cutting deck 152 can be greatly reduced, the load on the second blade 132 can decrease, and the locked-rotor problem can be solved. In addition, the side discharge performance and grass shredding performance are not affected.

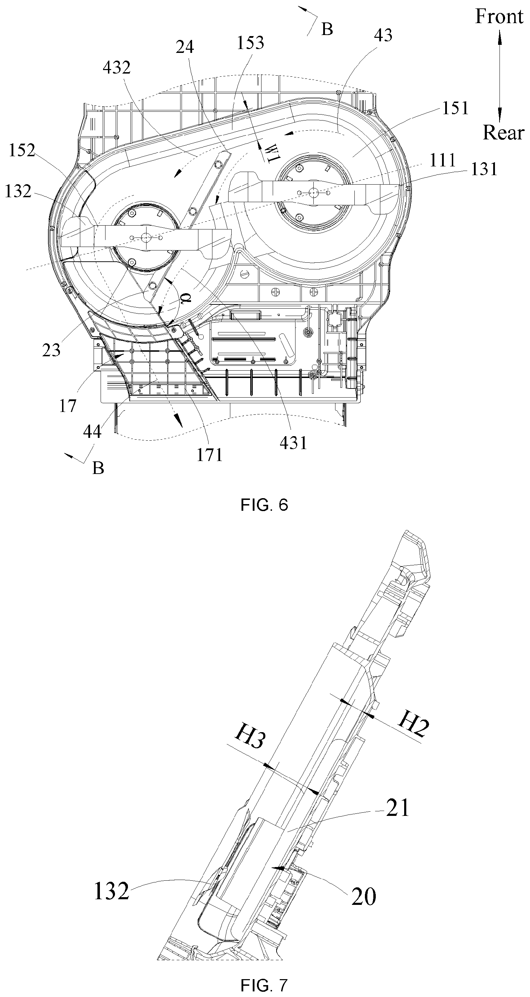

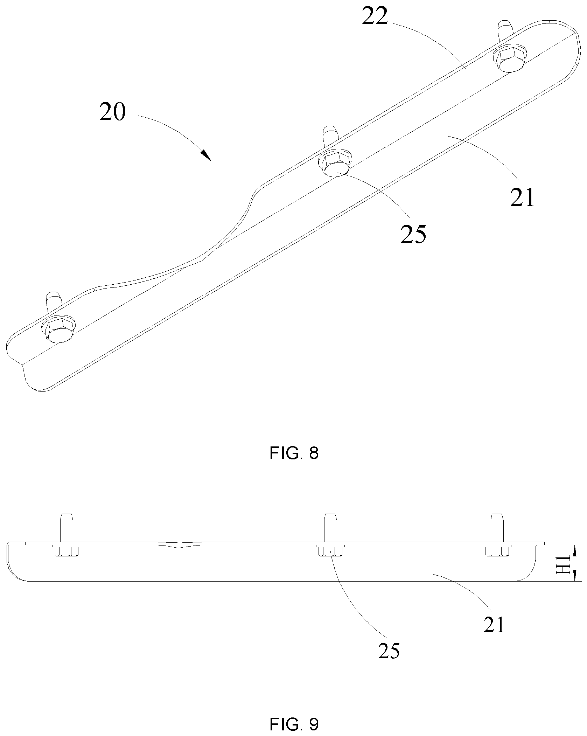

In some examples, as shown in FIGS. 4 and 6, the flow guide member 20 and the mower deck 15 are integrally formed or detachably arranged. The flow guide member 20 is L-shaped and includes a mounting portion 22 and a guide portion 21 that are connected to each other. During the design process, as shown in FIGS. 4 and 5, the mounting portion 22 and the mower deck 15 may be designed as an integrally formed structure. Specifically, a stamping method may be used to reduce the manufacturing processes while the connection stability between the flow guide member 20 and the mower deck 15 is ensured without the need for installation. As shown in FIGS. 6 and 9, the mounting portion 22 is connected to the mower deck 15. Alternatively, bolts 25 may be used to pass through the mounting portion 22 to connect the mounting portion 22 to the mower deck 15 so that the flow guide member 20 can be quickly replaced after being worn out. To ensure the stable connection between the flow guide member 20 and the mower deck 15, multiple bolts 25 are disposed at intervals along the extension direction of the mounting portion 22.

In some examples, as shown in FIG. 6, the first end 23 intersects with a grass discharge path of the grass outlet 171, and the included angle α between the flow guide member 20 and the grass discharge path is greater than or equal to 90 degrees. The grass discharge path is the extension direction of the sidewall of the grass outlet 171. In this manner, obstructed by the flow guide member 20, part of the grass clippings in the first cutting deck 151 can directly enter the grass outlet 171. Furthermore, the included angle α between the flow guide member 20 and the grass discharge path is configured to be an obtuse angle, thereby facilitating the arrangement of the flow guide member 20.

In some examples, as shown in FIG. 5, the connecting region 153 is formed between the second end 24 of the flow guide member 20 and the edge of the mower deck 15. Part of the grass clippings in the first cutting deck 151 and the grass clippings in the second cutting deck 152 merge through the connecting region 153 and then enter the grass outlet 171.

In some examples, as shown in FIG. 6, the width W1 of the connecting region 153 is greater than or equal to 50 mm and less than or equal to 150 mm. The width of the connecting region 153 may be 50 mm, 55 mm, 60 mm, 65 mm, 70 mm, ..., or 150 mm. By limiting the width of the connecting region 153, while the arrangement of the flow guide member 20 is facilitated, it can be ensured that part of the grass clippings in the first cutting deck 151 can smoothly enter the second cutting deck 152 and merge with the grass clippings in the second cutting deck 152.

In some examples, as shown in FIG. 4, the flow guide member 20 is parallel to a first tangent line 1312 of a cutting trajectory of the first blade 131, and the second end 24 does not intersect with the cutting trajectory of the first blade 131. In this manner, part of the cut grass clippings can smoothly pass through the connecting region 153 along the tangent direction of the first blade 131 and enter the first cutting deck 151, and the other part of the grass clippings can directly reach the grass outlet 171 through the gap between the flow guide member 20 and the movement trajectory of the first blade 131.

In some examples, as shown in FIG. 4, the distance L1 between the second end 24 and the first tangent line 1312 is greater than or equal to 5 mm. The distance L1 between the second end 24 and the first tangent line 1312 may be 5 mm, 6 mm, 7 mm, 8 mm, 9 mm, or the like. Of course, it is to be understood that the distance L1 between the second end 24 and the first tangent line 1312 is not affected by the fact that the flow guide member 20 is formed on or connected to the mower deck 15. Therefore, when the flow guide member 20 is connected to the mower deck 15 via the bolts 25, the distance L1 between the second end 24 and the first tangent line 1312 is greater than or equal to 5 mm. The distance L1 between the second end 24 and the first tangent line 1312 may be 5 mm, 6 mm, 7 mm, 8 mm, 9 mm, or the like. By limiting the distance between the second end 24 and the first tangent line 1312, the width of the passage through which part of the grass clippings directly enter the grass outlet 171 is limited. During designing, the designer may flexibly make a design according to different types of lawns, cutting speeds, or the like, and no further restrictions are imposed herein.

In some examples, as shown in FIG. 9, the height H1 of the flow guide member 20 is less than or equal to 100 mm. Since part of the flow guide member 20 is located within the cutting trajectory of the second blade 132, the height of the flow guide member 20 must be limited, thereby preventing the flow guide member 20 from interfering with the second blade 132. The height of the flow guide member 20 may be 100 mm, 95 mm, 90 mm, 85 mm, 80 mm, or the like. The designer may make a design according to requirements, and no further restrictions are imposed herein.

In some examples, as shown in FIG. 7, the distance H2 from the flow guide member 20 to the top surface of the cutting deck is less than or equal to 80 mm. The top surface of the cutting deck is a side of the cutting deck facing the first blade 131. The distance H3 from the flow guide member 20 to the installation plane of the second blade 132 is greater than or equal to 10 mm. The installation plane of the second blade 132 is a plane of the second blade 132 facing away from the electric motor when the second blade 132 is mounted with the electric motor for driving the second blade. By limiting the distance between the flow guide member 20 and the cutting deck and the distance between the flow guide member 20 and the second blade 132, the arrangement of the flow guide member 20 is facilitated while the flow guide member 20 does not interfere with the second blade 132.

In some examples, as shown in FIG. 4, the distance W2 between the first end 23 and the edge of the grass outlet 171 is greater than or equal to 50 mm and less than or equal to 150 mm. The edge of the grass outlet 171 is the edge of the notch on a side of the grass outlet 171 closest to the first end 23 of the flow guide member 20. The distance W2 between the first end 23 and the edge of the grass outlet 171 may be 50 mm, 60 mm, 70 mm, 80 mm, 90 mm, ..., or 150 mm. Of course, it is to be understood that the distance W2 between the first end 23 and the edge of the grass outlet 171 is not affected by the fact that the flow guide member 20 is formed on or connected to the mower deck 15. Therefore, when the flow guide member 20 is connected to the mower deck 15 via the bolts 25, the distance W2 between the first end 23 and the edge of the grass outlet 171 is greater than or equal to 50 mm and less than or equal to 150 mm. The distance W2 between the first end 23 and the edge of the grass outlet 171 may be 50 mm, 60 mm, 70 mm, 80 mm, 90 mm, ..., or 150 mm. The distance W2 between the first end 23 and the edge of the grass outlet 171 determines the flow rate of grass clippings directly entering the grass outlet 171 from the first cutting deck 151 and may be set by the designer according to actual requirements.

In an example, as shown in FIG. 3, the mower 100 is further provided, where the first blade 131 is driven by the first electric motor to rotate in a first direction to generate a first airflow 41 that drives grass clippings to flow toward the grass outlet 171, and the first airflow 41 includes a first part 411 and a second part 412. The first part 411 flows toward the grass outlet 171 through a first flow path 45; and the second part 412 flows toward the grass outlet 171 through a second flow path 46.

The first airflow 41 generated by the rotation of the first blade 131 causes the grass clippings cut in the first cutting deck 151 to be split when the grass clippings enter the second cutting deck 152. A part of grass clippings (the part with a flow direction consistent with the flow direction of grass clippings in the second cutting deck 152) merges with the grass clippings in the second cutting deck 152 under the action of the second part 412 of the first airflow 41, and the other part of grass clippings directly enters the grass outlet 171 under the action of the first part 411 of the first airflow 41. The grass clippings collected by the second cutting deck 152 can be greatly reduced, the load on the second blade 132 can decrease, and the locked-rotor problem can be solved. In addition, the side discharge performance and grass shredding performance are not affected.

In some examples, as shown in FIGS. 2 and 3, the mower 100 further includes the flow guide member 20 formed on or connected to the mower deck 15, the first flow path 45 is located on a first side of the flow guide member 20, and at least part of the second flow path 46 is located on a second side of the flow guide member 20. The flow guide member 20 is provided to isolate the first flow path 45 from the second flow path 46. The flow guide member 20 is L-shaped and includes the mounting portion 22 and the guide portion 21 that are connected to each other, and the mounting portion 22 is connected to the mower deck 15. During the design process, the mounting portion 22 and the mower deck 15 may be designed as an integrally formed structure. Specifically, a stamping method may be used to reduce the manufacturing processes while the connection stability between the flow guide member 20 and the mower deck 15 is ensured without the need for installation. Of course, alternatively, bolts 25 may be used to pass through the mounting portion 22 to connect the mounting portion 22 to the mower deck 15 so that the flow guide member 20 can be quickly replaced after being worn out. To ensure the stable connection between the flow guide member 20 and the mower deck 15, multiple bolts 25 are disposed at intervals along the extension direction of the mounting portion 22.

In some examples, the flow guide member 20 has the first end 23 facing the grass outlet 171 and the second end 24 facing away from the grass outlet 171 in the extension direction of the flow guide member 20, and the second end 24 is located in an intersecting region of the first flow path 45 and the second flow path 46. The first flow path 45 and the second flow path 46 are isolated by the second end 24 of the flow guide member 20, the grass clippings in the first cutting deck 151 are split by the second end 24 of the flow guide member 20, a part of grass clippings merges with the grass clippings in the second cutting deck 152, and the other part of grass clippings directly enters the grass outlet 171.

In some examples, the flow guide member 20 is disposed between the first rotation center line 1311 of the first blade 131 and the second rotation center line 1321 of the second blade 132. The first rotation center line 1311 of the first blade 131 is the center position of the output shaft of the first electric motor, and the second rotation center line 1321 of the second blade 132 is the center position of the output shaft of the second electric motor. In this manner, the flow guide member 20 plays a role in isolating the first flow path 45 from the second flow path 46 so that the grass clippings in the first cutting deck 151 can be effectively split.

In some examples, the distance from the flow guide member 20 to the second rotation center line 1321 of the second blade 132 is less than the distance from the flow guide member 20 to the first rotation center line 1311 of the first blade 131. Since the grass outlet 171 is located at the second cutting deck 152, by making the flow guide member 20 closer to the second rotation center line 1321 of the second blade 132, the following is facilitated: the grass clippings in the first cutting deck 151 enter the second cutting deck 152 and then are split.

In some examples, as shown in FIGS. 2 and 3, the flow guide member 20 has the first end 23 facing the grass outlet 171 and the second end 24 facing away from the grass outlet 171 in the extension direction of the flow guide member 20, and the connecting region 153 is formed in a gap between the second end 24 and the edge of the mower deck 15. Part of the grass clippings in the first cutting deck 151 and the grass clippings in the second cutting deck 152 merge through the connecting region 153 and then enter the grass outlet 171.

In some examples, as shown in FIG. 3, the flow guide member 20 is parallel to the first tangent line 1312 of the cutting trajectory of the first blade 131, and the distance L1 between the second end 24 and the first tangent line 1312 is greater than or equal to 5 mm. The distance L1 between the second end 24 and the first tangent line 1312 may be 5 mm, 6 mm, 7 mm, 8 mm, 9 mm, or the like. By limiting the distance between the second end 24 and the first tangent line 1312, the width of the passage through which part of the grass clippings directly enter the grass outlet 171 is limited. During designing, the designer may flexibly make a design according to different types of lawns, cutting speeds, or the like, and no further restrictions are imposed herein.

In some examples, the second blade 132 is driven by the second electric motor to rotate in the first direction, and the second electric motor and the first electric motor are not coaxially arranged. The second blade 132 is configured to rotate in the same direction as the first blade 131 so that it can be ensured that the grass clippings entering the second cutting deck 152 through the second flow path 46 can smoothly merge with the grass clippings in the second cutting deck 152. The first electric motor and the second electric motor are not coaxially arranged so that the interference between the first blade 131 and the second blade 132 can be avoided, the mowing area can be increased, and the mowing efficiency can be ensured. The first direction may be a clockwise direction or a counterclockwise direction.

In some examples, the second blade 132 is driven by the second electric motor to rotate in the first direction to generate a second airflow 42 that drives grass clippings to flow toward the grass outlet 171, and the second airflow 42 flows toward the grass outlet 171 through the second flow path 46. The second airflow 42 formed by the rotation of the second blade 132 and flowing toward the grass outlet 171 can play a suction role, thereby facilitating the following: some grass clippings in the first cutting deck 151 quickly enter the second flow path 46 and flow toward the grass outlet 171. In this manner, the grass collecting performance can be further improved and the locked-rotor phenomenon of the second electric motor can be improved, thereby reducing the operating current of the second electric motor and increasing the battery life of the whole machine.

In an example, as shown in FIGS. 2 to 6, the mower 100 is further provided. The mower 100 includes the flow guide member 20 disposed on the mower deck 15 and located between the first rotation center line 1311 of the first blade 131 and the second rotation center line 1321 of the second blade 132. The flow guide member 20 is configured to guide a first part 431 of a first grass clipping flow 43 formed by cutting by the first blade 131 to directly flow into the grass outlet 171 and allow a second part 432 of the first grass clipping flow to merge with the grass clippings cut by the second blade 132 to form a second grass clipping flow 44 flowing into the grass outlet 171. The first grass clipping flow and the second grass clipping flow are paths through which grass clippings flow.

By providing the flow guide member 20 on the mower deck 15, the grass clippings cut in the first cutting deck 151 are split when entering the second cutting deck 152. A part of grass clippings merges with the grass clippings in the second cutting deck 152, and the other part of grass clippings directly enters the grass outlet 171. That is to say, the first grass clipping flow 43 formed by the grass clippings cut in the first cutting deck 151 is split by the flow guide member 20 when entering the region of the second cutting deck 152. The first part 431 of the first grass clipping flow split by the flow guide member 20 directly flows into the grass outlet 171, and only the second part 432 of the first grass clipping flow merges with the grass clippings cut by the second blade 132 to form the second grass clipping flow 44, thereby greatly reducing the grass clippings collected by the second cutting deck 152, reducing the load on the second blade 132, and solving the locked-rotor problem. In addition, the side discharge performance and grass shredding performance are not affected.

In some examples, as shown in FIGS. 2 and 3, the flow guide member 20 and the mower deck 15 are integrally formed or detachably arranged. As shown in FIGS. 7 and 8, the flow guide member 20 is L-shaped and includes the mounting portion 22 and the guide portion 21 that are connected to each other, and the mounting portion 22 is connected to the mower deck 15. During the design process, the mounting portion 22 and the mower deck 15 may be designed as an integrally formed structure. Specifically, a stamping method may be used to reduce the manufacturing processes while the connection stability between the flow guide member 20 and the mower deck 15 is ensured without the need for installation. Of course, alternatively, bolts 25 may be used to pass through the mounting portion 22 to connect the mounting portion 22 to the mower deck 15 so that the flow guide member 20 can be quickly replaced after being worn out. To ensure the stable connection between the flow guide member 20 and the mower deck 15, multiple bolts 25 are disposed at intervals along the extension direction of the mounting portion 22.

In some examples, as shown in FIGS. 2 and 3, the grass outlet 171 is located on a side of the cutting chamber 150 where the second blade 132 is disposed. During the mowing process, the grass cut by the first blade 131 enters the second cutting deck 152 and is then discharged through the grass outlet 171. By providing the grass outlet 171 on a side of the second blade 132, subsequent grass collection is facilitated. In other examples, the grass outlet 171 may be disposed on a side of the cutting chamber 150 where the first blade 131 is disposed, and no further restrictions are imposed herein.

In some examples, as shown in FIG. 6, the flow guide member 20 has the first end 23 facing the grass outlet 171 and the second end 24 facing away from the grass outlet 171 in the extension direction of the flow guide member 20, the first end 23 intersects with the grass discharge path of the grass outlet 171, and the included angle α between the flow guide member 20 and the grass discharge path is greater than or equal to 90 degrees. The grass discharge path is the extension direction of the sidewall of the grass outlet 171. In this manner, obstructed by the flow guide member 20, part of the grass clippings in the first cutting deck 151 can directly enter the grass outlet 171. Furthermore, the included angle α between the flow guide member 20 and the grass discharge path is configured to be an obtuse angle, thereby facilitating the arrangement of the flow guide member 20.

In some examples, the flow guide member 20 has the first end 23 facing the grass outlet 171 and the second end 24 facing away from the grass outlet 171 in the extension direction of the flow guide member 20, and the connecting region 153 is formed in a gap between the second end 24 and the edge of the mower deck 15. Part of the grass clippings in the first cutting deck 151 and the grass clippings in the second cutting deck 152 merge through the connecting region 153 and then enter the grass outlet 171.

In some examples, the width W1 of the connecting region 153 is greater than or equal to 50 mm and less than or equal to 150 mm. The width of the connecting region 153 may be 50 mm, 55 mm, 60 mm, 65 mm, 70 mm, ..., or 150 mm. By limiting the width of the connecting region 153, while the arrangement of the flow guide member 20 is facilitated, it can be ensured that part of the grass clippings in the first cutting deck 151 can smoothly enter the second cutting deck 152 and merge with the grass clippings in the second cutting deck 152.

In some examples, as shown in FIG. 3, the flow guide member 20 has the first end 23 facing the grass outlet 171 and the second end 24 facing away from the grass outlet 171 in the extension direction of the flow guide member 20, the flow guide member 20 is parallel to the first tangent line 1312 of the cutting trajectory of the first blade 131, and the second end 24 does not intersect with the cutting trajectory of the first blade 131. In this manner, part of the cut grass clippings can smoothly pass through the connecting region 153 along the tangent direction of the first blade 131 and enter the first cutting deck 151, and the other part of the grass clippings can directly reach the grass outlet 171 through the gap between the flow guide member 20 and the movement trajectory of the first blade 131.

In some examples, as shown in FIG. 3, the distance L1 between the second end 24 of the flow guide member 20 and the first tangent line 1312 is greater than or equal to 5 mm. The distance L1 between the second end 24 of the flow guide member 20 and the first tangent line 1312 may be 5 mm, 6 mm, 7 mm, 8 mm, 9 mm, or the like. Of course, it is to be understood that the distance L1 between the second end 24 and the first tangent line 1312 is not affected by the fact that the flow guide member 20 is formed on or connected to the mower deck 15. Therefore, when the flow guide member 20 is connected to the mower deck 15 via the bolts 25, the distance L1 between the second end 24 and the first tangent line 1312 is greater than or equal to 5 mm. The distance L1 between the second end 24 and the first tangent line 1312 may be 5 mm, 6 mm, 7 mm, 8 mm, 9 mm, or the like. By limiting the distance between the second end 24 and the first tangent line 1312, the width of the passage through which part of the grass clippings directly enter the grass outlet 171 is limited. During designing, the designer may flexibly make a design according to different types of lawns, cutting speeds, or the like, and no further restrictions are imposed herein.

In some examples, as shown in FIG. 8, the height H1 of the flow guide member 20 is less than or equal to 100 mm. Since part of the flow guide member 20 is located within the cutting trajectory of the second blade 132, the height of the flow guide member 20 must be limited, thereby preventing the flow guide member 20 from interfering with the second blade 132. The height of the flow guide member 20 may be 100 mm, 95 mm, 90 mm, 85 mm, 80 mm, or the like. The designer may make a design according to requirements, and no further restrictions are imposed herein.

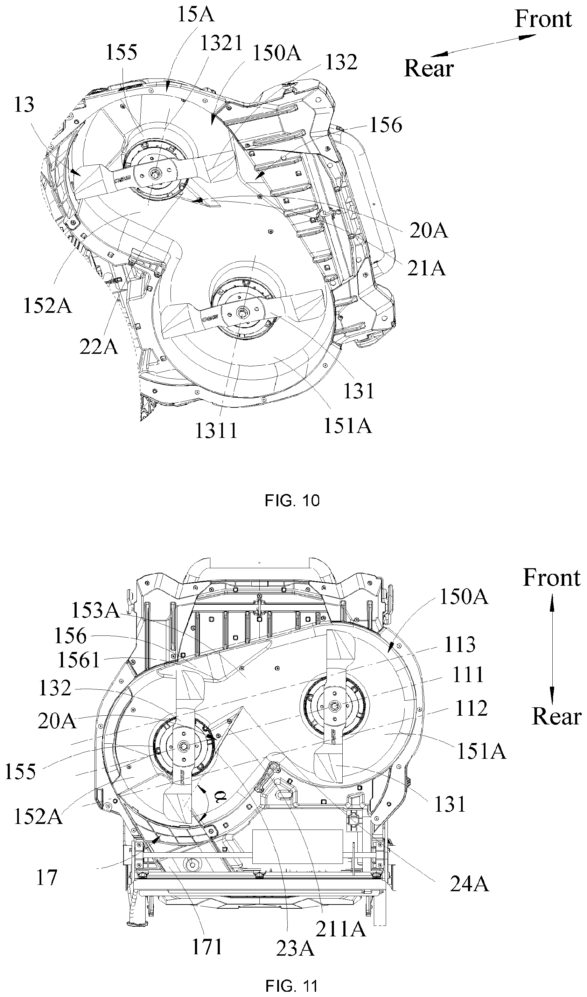

As shown in FIGS. 1 and 10, the mower 100 further includes a battery pack 500, a battery pack compartment, and a battery pack holder. The battery pack 500 is used for supplying power to the drive assembly 14. The battery pack compartment is used for accommodating the battery pack 500. The battery pack holder 100 is used for fixing and supporting the battery pack compartment so that the battery pack compartment can be at least partially disposed above the housing assembly 121.

In some examples, the battery pack compartment is provided with a battery pack cover. The battery pack cover is at least partially transparent so that it is convenient for the user to view the state of charge of the battery pack 500 at all times. Optionally, the battery pack cover may be fixed to the battery pack compartment through a latch mechanism. The latch mechanism may be disposed on the battery pack cover or the battery pack compartment. The latch mechanism includes a snap and an elastic restoring member. When the user presses the snap, the elastic restoring member is compressed. In this case, the battery pack cover is opened from the battery pack compartment. When the user releases the snap and presses the battery pack cover, the elastic restoring member returns to its original state. In this case, the battery pack cover is closed onto the battery pack compartment under the action of gravity.

In some examples, the battery pack 500 may be a single battery pack 500. In this case, the battery pack 500 is a high-capacity battery pack 500, and the capacity of the battery pack 500 is greater than or equal to 40Ah. In some examples, the battery pack 500 may include multiple battery packs 500. In this case, the battery pack 500 is a low-capacity battery pack 500, and the capacity of the battery pack 500 is greater than or equal to 2 Ah and less than or equal to 20 Ah. Regardless of whether the battery pack 500 is the single high-capacity battery pack 500 or includes the multiple low-capacity battery packs 500, the battery life of the battery pack 500 is greater than or equal to 100 min, and the power of the battery pack 500 is greater than or equal to 2000 W. In this manner, the mower 100 is supported to operate for a long period with higher efficiency so that the user does not need to frequently replace the battery pack 500. Optionally, an interface for a high-capacity battery pack is disposed on the battery pack compartment and used for connecting the high-capacity battery pack 500. Optionally, an interface for a low-capacity battery pack may be further disposed on the battery pack compartment and used for connecting the low-capacity battery pack 500. Optionally, an adapter for the battery pack 500 may be disposed on the interface for the high-capacity battery pack so that the interface for the high-capacity battery pack is connected to the multiple low-capacity battery packs 500 through the adapter for the battery pack 500. The battery pack compartment adaptable to both the high-capacity battery pack 500 and the multiple low-capacity battery packs 500 is provided so that it is convenient for the user to make a choice according to the situations, thereby saving the usage costs of the user. In addition, the multiple low-capacity battery packs 500 are provided so that the following problem can be solved: it is inconvenient to insert or remove the high-capacity battery pack 500 when the battery pack 500 runs out of power. For the multiple low-capacity battery packs 500, only the low-capacity battery pack 500 running out of power needs to be replaced, thereby facilitating replacement.

In some examples, the mower 100 may further include a charging device for charging the battery pack 500. The charging device may be disposed on the battery pack compartment. Alternatively, the charging device may be disposed at another portion on the mower 100 other than the battery pack compartment, where the portion is convenient for the operation of the user. The position of the charging device is not limited in the present application. The charging device includes a charging port and a charging port cover. When the charging device is not in use, the charging port cover covers the charging port to prevent dust, grass clippings, and the like from entering the charging port and affecting charging. When the charging device is in use, the charging port mates with a charging gun to charge the battery pack 500. In this case, the charging port cover abuts against the charging gun, thereby ensuring the safety of charging the battery pack 500 through the charging gun. Optionally, the orientation of the charging port is obliquely upward so that it is convenient for the user to charge the battery pack 500 through the charging gun. The charging device is disposed on the mower 100 so that the battery pack 500 can be charged directly when running out of power. In this manner, the battery pack 500 does not need to be replaced, and it is convenient for the user to use the mower 100.

As shown in FIGS. 10 to 13, a flow guide member 20A and a mower deck 15A as another example of the present application are the same as some of the structures or components in the mower 100 in FIGS. 2 to 9, and the reference numerals of some of the same components in FIGS. X to X follow the reference numerals adopted in FIGS. X to X.

The mower deck 15A is formed with a cutting chamber 150A for accommodating at least part of the cutting assembly 13. A first cutting deck 151A and a second cutting deck 152A are disposed in the cutting chamber 150A. The first blade 131 is disposed in the first cutting deck 151A, and the second blade 132 is disposed in the second cutting deck 152A. Optionally, each of the first blade 131 and the second blade 132 may have a dimension of 390 mm. Optionally, each of the first blade 131 and the second blade 132 may have a dimension of 376 mm. In addition, the first blade 131 and the second blade 132 may have other dimensions. Alternatively, the dimension of the first blade 131 is different from the dimension of the second blade 132. The dimension of the first blade 131 and the dimension of the second blade 132 are not limited in the present application.

In some examples, an end of the grass discharge passage 17 is connected to the second cutting deck 152A, and the other end of the grass discharge passage 17 includes the grass outlet 171 disposed at the rear end of the mower 100. In some examples, the grass outlet 171 is located on a side of the cutting chamber 150A where the second blade 132 is disposed. The first electric motor controls the first blade 131 to move the grass clippings in the first cutting deck 151A into the second cutting deck 152A through a connecting region 153A. The second electric motor controls the second blade 132 to move the grass clippings in the second cutting deck 152A into the grass discharge passage 17. The grass discharge passage 17 is used for guiding the grass clippings from the second cutting deck 152A to the grass outlet 171.

The mower deck 15A is formed with or connected to the flow guide member 20A, and the flow guide member 20A has a first end 23A facing the grass outlet 171 and a second end 24A facing away from the grass outlet 171 in the extension direction of the flow guide member 20A. The first end 23A and the second end 24A are located on two sides of the first plane 111, respectively, and the first plane 111 is defined as a plane that passes through the first rotation center line 1311 of the first blade 131 and the second rotation center line 1321 of the second blade 132 and is perpendicular to the support plane.

The mower deck 15A is formed with or connected to the flow guide member 20A so that the first grass clippings cut by the first cutting deck 151A are split when entering the second cutting deck 152A (the side where the grass outlet 171 is located). The first part of grass clippings (the part with a flow direction consistent with the flow direction of grass clippings in the second cutting deck 152A) merges with the second grass clippings in the second cutting deck 152A, and the second part of grass clippings directly enters the grass outlet 171. The grass clippings collected by the second cutting deck 152A can be greatly reduced, the load on the second blade 132 can decrease, and the locked-rotor problem can be solved. In addition, the side discharge performance and grass shredding performance are not affected.

The flow guide member 20A and the mower deck 15A are integrally formed or detachably arranged. The flow guide member 20A includes a mounting portion 22A and a guide portion 21A that are connected to each other, and the mounting portion 22A is connected to the mower deck 15A. Alternatively, bolts 25 may be used to pass through the mounting portion 22A to connect the mounting portion 22A to the mower deck 15A so that the flow guide member 20A can be quickly replaced after being worn out. To ensure the stable connection between the flow guide member 20A and the mower deck 15A, multiple bolts 25 are disposed at intervals along the extension direction of the mounting portion 22A.

As shown in FIGS. 10 and 11, the mower deck 15A includes a second mounting portion 155 for accommodating the second electric motor, the flow guide member 20A is mounted on the outer circumference of the second mounting portion 155, the guide portion 21A guides the grass clippings in the first cutting deck 151A directly into a first guide surface 211A of the grass outlet 171, and the first guide surface 211A or the extension line of the first guide surface 211A is tangent to the outer circumference of the second mounting portion 155. A plane parallel to the first plane 111 and tangent to the rear side of the second mounting portion is defined as a second plane 112, and the first guide surface 211A is located above the second plane, that is to say, the first end 23A and the second end 24A are located on two sides of the first plane 111, respectively, and the first end 23A and the second end 24A are separately located on the front side of the second plane. In this example, the first end 23A and the second end 24A are separately located on the upper side of the second plane, thereby increasing the distance between the first guide surface 211A and the mower deck 15A, increasing the width of the passage through which grass clippings from the first cutting deck 151A directly enter the grass outlet 171, and increasing the amount of grass clippings from the first cutting deck 151A directly entering the grass outlet 171.

In some examples, the extension line of the first guide surface 211A intersects with the grass discharge path of the grass outlet 171, and the included angle α between the flow guide member 20A and the grass discharge path is greater than or equal to 90 degrees. The grass discharge path is the extension direction of the sidewall of the grass outlet 171. In this manner, obstructed by the flow guide member 20A, part of the grass clippings in the first cutting deck 151A can directly enter the grass outlet 171. Furthermore, the included angle α between the flow guide member 20A and the grass discharge path is configured to be an obtuse angle, thereby facilitating the arrangement of the flow guide member 20A.

In some examples, the connecting region 153A is formed between the second end 24A of the flow guide member 20A and the edge of the mower deck 15A. Part of the grass clippings in the first cutting deck 151A and the grass clippings in the second cutting deck 152A merge through the connecting region 153A and then enter the grass outlet 171. A plane parallel to the first plane 111 and tangent to the front side of the second mounting portion is defined as a third plane 113. The first end 23A and the second end 24A are separately located on the rear side of the third plane 113. It is to be understood that the first end 23A and the second end 24A are located between the second plane 112 and the third plane 113. In this manner, the width of the connecting region 153A is increased.

The mower deck 15A is provided with a baffle 156 located on the inner side of the cutting chamber 150A and protruding backward. The baffle 156 is substantially V-shaped and has a vertex 1561 facing the rear side of the cutting chamber 150. The vertex 1561 is located on the front side of the flow guide member 20A. It is to be understood that the vertex 1561 is basically at the narrowest position of the connecting region 153A. The vertex 1561 is located within the region of the second cutting deck 152A. The baffle 156 and the flow guide member 20A mate to split the first grass clippings cut in the first cutting deck 151A when the first grass clippings enter the second cutting deck 152A (the side where the grass outlet 171 is located), the first part of grass clippings (the part with a flow direction consistent with the flow direction of grass clippings in the second cutting deck 152A) merges with the second grass clippings in the second cutting deck 152A, and the second part of grass clippings directly enters the grass outlet 171. For example, the baffle 156 is integrally formed with the mower deck 15A.

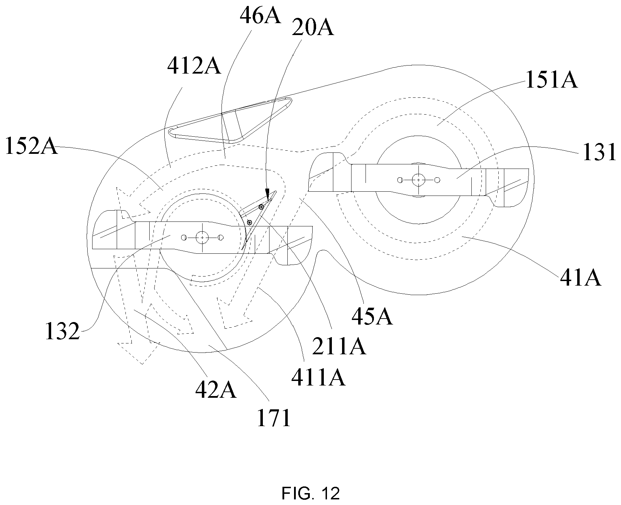

In an example, as shown in FIG. 12, the mower 100 is further provided, where the first blade 131 is driven by the first electric motor to rotate in a first direction to generate a first airflow 41A that drives grass clippings to flow toward the grass outlet 171, and the first airflow 41A includes a first part 411A and a second part 412A. The first part 411A flows toward the grass outlet 171 through a first flow path 45A; and the second part 412A flows toward the grass outlet 171 through a second flow path 46A.

The first airflow 41A generated by the rotation of the first blade 131 causes the grass clippings cut in the first cutting deck 151A to be split when the grass clippings enter the second cutting deck 152A. A part of grass clippings (the part with a flow direction consistent with the flow direction of grass clippings in the second cutting deck 152A) merges with the grass clippings in the second cutting deck 152A under the action of the second part 412A of the first airflow 41A, and the other part of grass clippings directly enters the grass outlet 171 under the action of the first part 411A of the first airflow 41A. The grass clippings collected by the second cutting deck 152A can be greatly reduced, the load on the second blade 132 can decrease, and the locked-rotor problem can be solved. In addition, the side discharge performance and grass shredding performance are not affected.

In some examples, the mower 100 further includes the flow guide member 20A formed on or connected to the mower deck 15A, the first flow path 45A is located on a first side of the flow guide member 20A, and at least part of the second flow path 46A is located on a second side of the flow guide member 20A. For example, the first flow path 45A is located on a side of the first guide surface 211A. The flow guide member 20A is provided to isolate the first flow path 45A from the second flow path 46A.

In some examples, the flow guide member 20A has the first end 23A facing the grass outlet 171 and the second end 24A facing away from the grass outlet 171 in the extension direction of the flow guide member 20A, and the second end 24A is located in an intersecting region of the first flow path 45A and the second flow path 46A. The first flow path 45A and the second flow path 46A are isolated by the second end 24A of the flow guide member 20A, the grass clippings in the first cutting deck 151A are split by the second end 24A of the flow guide member 20A, a part of grass clippings merges with the grass clippings in the second cutting deck 152A, and the other part of grass clippings directly enters the grass outlet 171.

As shown in FIG. 10, the flow guide member 20A is disposed between the first rotation center line 1311 of the first blade 131 and the second rotation center line 1321 of the second blade 132. The first rotation center line 1311 of the first blade 131 is the center position of the output shaft of the first electric motor, and the second rotation center line 1321 of the second blade 132 is the center position of the output shaft of the second electric motor. In this manner, the flow guide member 20A plays a role in isolating the first flow path 45A from the second flow path 46A so that the grass clippings in the first cutting deck 151A can be effectively split.

In some examples, the second blade 132 is driven by the second electric motor to rotate in the first direction, and the second electric motor and the first electric motor are not coaxially arranged. The second blade 132 is configured to rotate in the same direction as the first blade 131 so that it can be ensured that the grass clippings entering the second cutting deck 152A through the second flow path 46A can smoothly merge with the grass clippings in the second cutting deck 152A. The first electric motor and the second electric motor are not coaxially arranged so that the interference between the first blade 131 and the second blade 132 can be avoided, the mowing area can be increased, and the mowing efficiency can be ensured. The first direction may be a clockwise direction or a counterclockwise direction.

In some examples, the second blade 132 is driven by the second electric motor to rotate in the first direction to generate a second airflow 42A that drives grass clippings to flow toward the grass outlet 171, and the second airflow 42A flows toward the grass outlet 171 through the second flow path 46A. The second airflow 42A formed by the rotation of the second blade 132 and flowing toward the grass outlet 171 can play a suction role, thereby facilitating the following: some grass clippings in the first cutting deck 151A quickly enter the second flow path 46A and flow toward the grass outlet 171. In this manner, the grass collecting performance can be further improved and the locked-rotor phenomenon of the second electric motor can be improved, thereby reducing the operating current of the second electric motor and increasing the battery life of the whole machine.

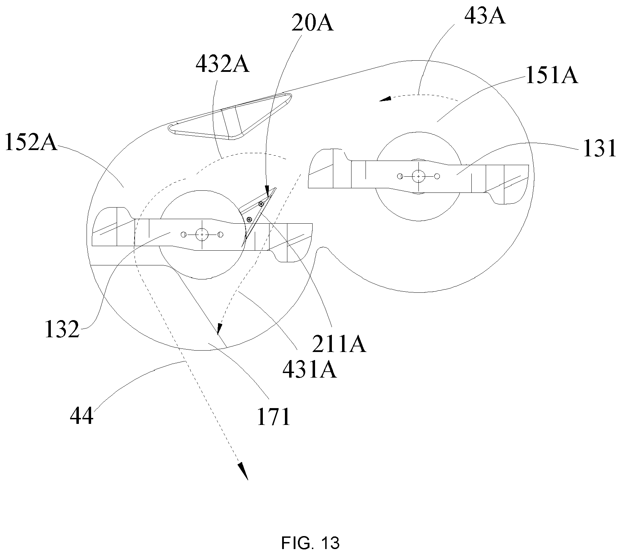

In an example, as shown in FIG. 13, the mower 100 is further provided. The mower 100 includes the flow guide member 20A disposed on the mower deck 15A and located between the first rotation center line 1311 of the first blade 131 and the second rotation center line 1321 of the second blade 132. The flow guide member 20A is configured to guide a first part 431A of a first grass clipping flow 43A formed by cutting by the first blade 131 to directly flow into the grass outlet 171 and allow a second part 432A of the first grass clipping flow to merge with the grass clippings cut by the second blade 132 to form a second grass clipping flow 44A flowing into the grass outlet 171. The first grass clipping flow and the second grass clipping flow are paths through which grass clippings flow.

By providing the flow guide member 20A on the mower deck 15A, the grass clippings cut in the first cutting deck 151A are split when entering the second cutting deck 152A. A part of grass clippings merges with the grass clippings in the second cutting deck 152A, and the other part of grass clippings directly enters the grass outlet 171. That is to say, the first grass clipping flow 43A formed by the grass clippings cut in the first cutting deck 151A is split by the flow guide member 20A when entering the region of the second cutting deck 152A. The first part 431A of the first grass clipping flow split by the flow guide member 20A directly flows into the grass outlet 171, and only the second part 432A of the first grass clipping flow merges with the grass clippings cut by the second blade 132 to form the second grass clipping flow 44A, thereby greatly reducing the grass clippings collected by the second cutting deck 152A, reducing the load on the second blade 132, and solving the locked-rotor problem. In addition, the side discharge performance and grass shredding performance are not affected.

As shown in FIGS. 14 to 16, the mower deck 15A includes a top wall 157A and a side wall 158A extending downward from the top wall 157A to form a circumferential enclosure. The top wall 157A and side wall 158A collectively form the aforementioned cutting chamber 150A. The mower deck 15A is an integral component, with the top wall 157A provided with a second mounting portion 155. The flow guide member 20, 20A is also connected to the side of the top wall 157A facing the cutting chamber 150A. The side wall 158A is provided with two interruption areas forming a grass outlet 171 and a discharge port of the side discharge assembly 16. In some examples, the two interruption areas forming the grass outlet 171 and the discharge port of the side discharge assembly 16 are arranged on the top wall 157A.

As shown in FIGS. 14 to 19, the mower deck 15A includes a block 159 formed or connected to the side wall 158A of the cutting chamber 150A. The block 159 is positioned between the first rotation center line 1311 and the second rotation center line 1321, specifically located at a connection position between the first cutting deck 151A and the second cutting deck 152A. At least part of the block 159 protrudes inward into the cutting chamber 150A, with its inward protrusion increasing as it approaches the bottom opening 1501A of the cutting chamber 150A. In some examples, along an axial direction of the cutting chamber 150A (i.e., a direction parallel to the rotation center line), the block 159 has a first end 1591 near the bottom opening 1501A and a second end 1592 near the top wall 157A of the mower deck 15A. At least part of the first end 1591 protrudes further inward than the second end 1592. The first end 1591 and second end 1592 respectively have side end surfaces facing the inside of the cutting chamber 150A, where at least part of a first side end surface 1593 of the first end 1591 protrudes further toward the inside of the cutting chamber 150A than a second side end surface 1594 of the second end 1592.

In this example, an area surrounded by a track formed by a tip of the first blade 131 rotating one circle (360°) is defined as a first cutting area 1313 of the first blade 131, an area surrounded by a track formed by a tip of the second blade 132 rotating one circle (360°) is defined as a second cutting area 1323 of the second blade 132. An area in the cutting chamber 150A that is neither covered by the first cutting area 1313 of the first blade 131 nor by the second cutting area 1323 of the second blade 132is defined as a gap area 1322. At least part of the block 159 is positioned within this gap area 1322.

Since the gap area 1322 is not covered by the two cutting areas, an airflow generated by the rotation of the blades is relatively small in the gap area 1322. Therefore, in the grass discharge mode, the long grass clippings or insufficiently chopped grass clippings are likely to fall out of the gap area 1322 and cannot be discharged from the grass discharge port. In the related art, in order to reduce the area of the gap area 1322, the side wall 158A of the mower deck 15A is used to extend into the gap area 1322, but such a setting will prevent the vegetation from entering the cutting chamber 150A, making the gap area 1322 a blind area for cutting, so it is easy to cause the problem of missing the cutting of vegetation. In this example, the block 159 is provided to the first cutting deck 151A, and the first end 1591 of the block 159 near the bottom opening 1501A protrudes further toward the inside of the cutting chamber 150A than the second end 1592 near the top wall, so that a lip structure extending inward is formed at the bottom opening 1501A of the cutting chamber 150A, and the grass clippings can be returned and cut again when they touch the protruding first end 1591 of the block 159, thereby extending the residence time of the grass clippings in the cutting chamber 150A. The block 159 is added to the mower deck 15A, and the second end 1592 of the block 159 basically does not occupy the space in the cutting chamber 150A, thereby ensuring the area of the cutting chamber 150A to accommodate vegetation, and at the same time improving the problems of grass falling and mowing blind area.

In this example, the first side end surface 1593 of the first end 1591 that protrudes further toward the inside of the cutting chamber 150A than the second end 1592 is located in the gap area 1322, and the farthest position of the first end 1591 protruding inwardly is basically opposite to the closest position of the first cutting area 1313 and the second cutting area 1323.

As shown in FIGS. 15, 17 and 18, in this example, the second side end surface 1594 is substantially flush with the side wall 158A of the cutting chamber 150A, and illustratively, the second side end surface 1594 of the second end 1592 does not protrude from the side wall 158A of the cutting chamber 150A. A transition surface 1595 is provided between the first end 1591 and the second end 1592, and the transition surface 1595 connects the first side end surface 1593 of the first end 1591 and the second side end surface 1594 of the second end 1592 smoothly. Exemplarily, there is a size difference between the first side end surface 1593 of the first end 1591 and the second side end surface 1594 of the second end 1592, and the transition surface 1595 is provided by surface fitting and transition connection, so that the first side end surface 1593 of the first end 1591, the transition surface 1595 and the second side end surface 1594 of the second end 1592 form a continuous smooth surface.

In this example, the grass outlet 171 is provided in the second cutting deck 152A, and the size of the first end 1591 of the block 159 protruding inwardly increases gradually along the rotation direction of the second blade 132. In some examples, a starting end of the first end 1591 is flush with the second end 1592, and the second side end surface 1594of the second end 1592 is substantially flush with the side wall 158A of the cutting chamber 150A. A starting end of the first side end surface 1593 of the first end 1591 is also flush with the side wall 158A of the cutting chamber 150A, thereby preventing the block 159 from forming a sudden step with the inside of the cutting chamber 150A, preventing grass clippings from accumulating at the sudden step. The first side end surface 1593 of the first end 1591 increases in size along the rotation direction to form a smooth curved surface, thereby ensuring smooth fluid movement of the grass clippings flow and avoiding blocking of fluid movement due to the sudden step.

In some alternative examples, at least a portion of the first side end surface 1593 of the first end 1591 of the block 159 protrudes further toward the inside of the cutting chamber 150A than the second side end surface 1594 of the second end 1592, and at the same time, the block 159 increases in height along the rotation direction of the blade. In some alternative examples, at least a portion of the first side end surface 1593 of the first end 1591 of the block 159 protrudes further toward the inside of the cutting chamber 150A than the second side end surface 1594 of the second end 1592. At the same time, the height of the first end 1591 increases along the rotation direction of the blade, that is, the first end 1591 is inclined relative to the bottom surface of the cutting chamber 150A in an up-down direction, and a bottom surface of the first end 1591 is basically parallel or basically flush with a bottom surface of the bottom opening 1501A of the cutting chamber 150A, so as to guide the grass clippings flow to be thrown toward the blade. In some alternative examples, at least part of the first side end surface 1593 of the first end 1591 of the block 159 protrudes further toward the inside of the cutting chamber 150A than the second side end surface 1594 of the second end 1592, and at the same time, the height of the first end 1591 decreases along the rotation direction of the blade, that is, the first end 1591 is tilted downward relative to the bottom surface of the cutting chamber 150A in the up-down direction, and the bottom surface of the first end 1591 is substantially parallel or substantially flush with the bottom surface of the cutting chamber 150A to reduce missed cutting.

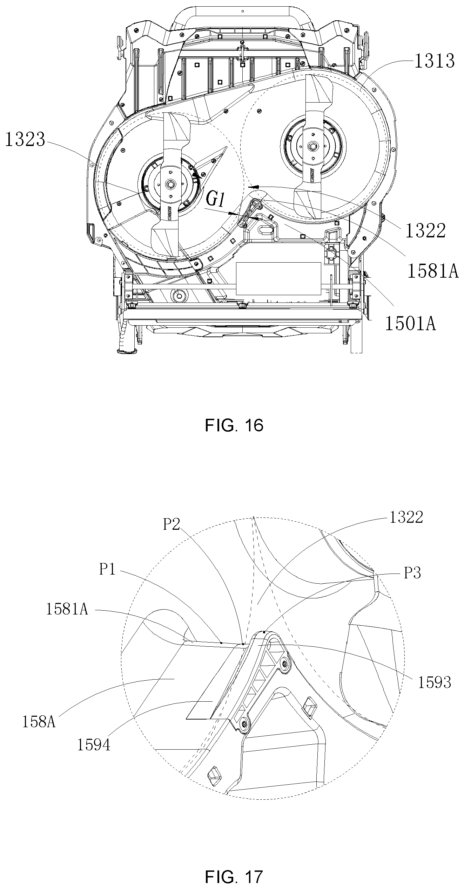

As shown in FIGS. 17 to 19, the block 159 is disposed at a position where the first cutting deck 151A and the second cutting deck 152A are connected. The side end surface of the block 159 located in the first cutting deck 151A belongs to the first cutting deck 151A, and the side end surface of the block 159 located in the second cutting deck 152A belongs to the second cutting deck 152A. It can be understood that the side end surface of the block 159 is also part of the side wall 158A of the cutting chamber 150A. At the position where the first cutting deck 151A and the second cutting deck 152A are connected, an arc surface 1581A facing inward and convex forward is formed, and the block 159 at least partially overlaps with the arc surface 1581A. This arc surface 1581A is formed by first bending the side wall 158A inwardly of the cutting chamber 150A and then bending outwardly. A first vertex P1 is formed at the frontmost end of the arc surface 1581A. The second side end surface 1594 of the second end 1592 is flush with at least part of the arc surface 1581A, and the second vertex P2 at the frontmost end of the second end 1592 is substantially flush with the first vertex P1 of the arc surface 1581A in the axial direction. The third vertex P3 at the frontmost end of the first end 1591 is located in front of the second vertex P2, and the third vertex P3 at the frontmost end of the first end 1591 is located in front of the first vertex P1.

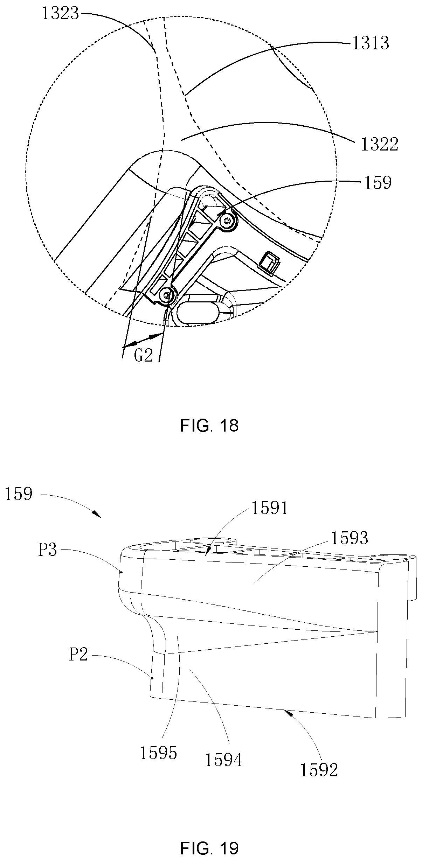

The gap area 1322 is formed at the position where the first cutting deck 151A and the second cutting deck 152A are connected. In the gap area 1322, there is a gap between the second cutting area 1323 formed by the second blade 132 and the side wall 158A of the second cutting deck 152A. The gap between the second cutting area 1323 and the side wall 158A of the second cutting deck 152A at the bottom opening 1501A is the minimum value, and the gap at the bottom opening 1501A is smaller than the gap between the second cutting area 1323 and the side wall 158A of the second cutting deck 152A above the bottom opening. In this example, from the bottom opening 1501A upward, the size of the gap first gradually increases, and then remains basically unchanged. In this example, the size of the gap gradually increases from the third vertex P3 to the second vertex P2, and remains basically unchanged from the second vertex P2 to the first vertex P1. Exemplarily, as shown in FIG. 16, at the bottom opening 1501A, i.e., at the third vertex P3, the size of the gap G1 between the second cutting area 1323 and the side wall 158A of the second blade 152A is greater than or equal to 10 mm and less than or equal to 30 mm. As shown in FIG. 18, at the second vertex P2 or the first vertex P1, the size of the gap G2 between the second cutting area 1323 and the side wall 158A of the second blade 152A is greater than 30 mm and less than or equal to 50 mm. Exemplarily, at the bottom opening 1501A, i.e., at the third vertex P3, the size of the gap G1 between the second cutting area 1323 and the side wall 158A of the second blade 152A is 24 mm, and at the second vertex P2 or the first vertex P1, the size of the gap G2 between the second cutting area 1323 and the side wall 158A of the second blade 152A is 40 mm.

In some examples, there is a gap between the first cutting area 1313 formed by the first blade 131 and the side wall 158A of the first cutting deck 151A. The technical features of the gap between the second cutting area 1323 and the side wall 158A of the second cutting deck 152A are also applicable to the gap between the first cutting area 1313 and the side wall 158A of the first cutting deck 151A. That is, the gap between the first cutting area 1313 and the side wall 158A of the first cutting deck 151A at the bottom opening 1501A is the minimum value, and the gap is smaller than the gap between the first cutting area 1313 and the side wall 158A of the first cutting deck 151A above the opening. In this example, from the bottom opening 1501A upward, the size of the gap first gradually increases and then remains basically unchanged. In this example, the size of the gap gradually increases from the third vertex P3 to the second vertex P2, and remains basically unchanged from the second vertex P2 to the first vertex P1.

In some examples, the block 159 described above is an independent component, and the block 159 is connected to the side wall 158A of the mower deck 15A. Exemplarily, the block 159 is connected to the side wall 158A of the mower deck 15A by fasteners. Exemplarily, the block 159 is detachably connected to the side wall 158A of the mower deck 15A by fasteners. Exemplarily, the block 159 is non-detachably installed by welding, gluing or riveting. Exemplarily, one or more blocks 159 may be provided. For example, the blocks 159 may be provided in the gap area 1322 at the front side and the rear side of the mower deck 15A, respectively, or multiple blocks 159 may be provided in one gap area 1322.

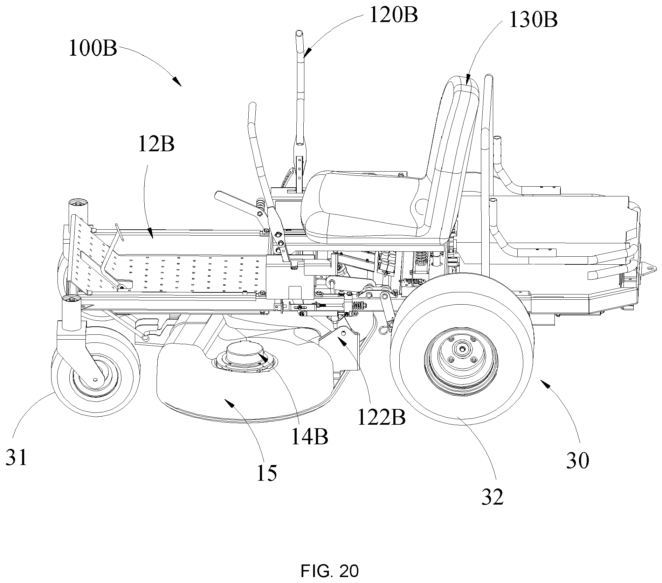

In some examples, the mower is a push mower or a riding mower. As shown in FIG. 20, a mower 100B is a manned mower. In this example, the manned mower is a riding mower 100B. In other alternative examples, the manned mower is a stand-on mower. The riding mower 100B includes an operating lever 120B, a main frame 12B, a seat 130B, a power output assembly 14B, a traveling assembly, an operating assembly, and a power supply device. The main frame is used for supporting the seat 130B, the power output assembly 14B, the traveling assembly, the operating assembly, and the power supply device. The seat 130B is used for the user to sit on and is mounted on the main frame. The operating lever 120B is used for controlling the start, speed, and stop of the mower 100B. The traveling assembly is used for enabling the riding mower 100B to travel on the lawn. The operating assembly is used for the user to operate to control the riding mower 100B to travel and output power.

The power output assembly 14B includes an output member for outputting power to implement a mechanical function. The output member may specifically be a mowing element. The power output assembly 14B is further connected to the main frame. In this example, the power output assembly 14B may specifically be mounted on the lower side of the main frame. The power output assembly 14B further includes a motor and a chassis 122B. The mowing element is used for implementing a mowing function. The motor is used for driving the mowing element to rotate at a high speed. The chassis 122B is formed with an accommodation space for accommodating at least part of the motor and part of the mowing element. The power output assembly 14B may include more than one mowing element. Correspondingly, the number of motors may correspond to the number of mowing elements.

Compared with the push mower shown in FIG. 1, the manned riding mower shown in FIG. 20 may adopt the mower deck 15 and the flow guide member 20 with the same or similar structures. Specifically, the mower deck 15, the cutting assembly 13, and the flow guide member 20 of the manned mower have basically the same structural features as those of the push mower except that the dimensions are adaptively adjusted according to the ratio of the dimension of the manned mower to the dimension of the push mower.

The basic principles, main features, and advantages of the present application are shown and described above.

## Claims

1. A mower (100, 100B), comprising:
a traveling wheel set (30) comprising a plurality of traveling wheels forming a support plane, wherein the traveling wheel set is configured to support the mower (100, 100B) to travel on a ground;
a mower deck (15, 15A) having a cutting chamber (150, 150A) that is open downward, wherein the cutting chamber (150, 150A) is formed with at least a grass outlet (171); and
a cutting assembly (13) at least partially accommodated in the cutting chamber (150, 150A) and comprising a first blade (131) and a second blade (132) that are adjacently arranged along a configuration direction and have a same direction of rotation;
wherein the first blade is driven by a first electric motor to rotate in a first direction to generate a first airflow (41, 41A) that drives grass clippings to flow toward the grass outlet; **characterized in that**
a flow guide member (20, 20A) is provided in the cutting chamber (150, 150A) and integrally formed or detachably arranged with the mower deck (15, 15A);
the flow guide member (20, 20A) has a first end (23, 23A) close to the grass outlet and a second end (24, 24A) away from the grass outlet in an extension direction of the flow guide member (20, 20A), wherein a gap is arranged between the second end (24, 24A) and an edge of the mower deck (15, 15A), forming a connecting region (153, 153A); whereby
the first airflow (41, 41A) comprises a first part (411, 411A) and a second part (412, 412A), the first part (411, 411A) flows toward the grass outlet through a first flow path (45, 45A) located on a first side of the flow guide member (20, 20A), and the second part (412, 412A) flows toward the grass outlet through a second flow path (46, 46A) located on a second side of the flow guide member (20, 20A).

2. The mower (100, 100B) of claim 1, wherein the flow guide member (20, 20A) has a first end (23, 23A) facing the grass outlet and a second end (24, 24A) facing away from the grass outlet in an extension direction of the flow guide member (20, 20A), and the second end (24, 24A) is located in an intersecting region of the first flow path (45, 45A) and the second flow path (46, 46A).

3. The mower (100, 100B) of claim 1, wherein the flow guide member (20, 20A) is disposed between a first rotation center line (1311) of the first blade and a second rotation center line (1321) of the second blade.

4. The mower (100, 100B) of claim 3, wherein the flow guide member (20, 20A) has a first end (23, 23A) close to the grass outlet and a second end (24, 24A) away from the grass outlet in an extension direction of the flow guide member (20, 20A), the first end (23, 23A) and the second end (24, 24A) are located on two sides of a first plane (111), respectively, and the first plane (111) is defined as a plane that passes through the first rotation center line (1311) of the first blade and the second rotation center line (1321) of the second blade and is perpendicular to the support plane.

5. The mower (100, 100B) of claim 3, wherein a distance from the flow guide member (20, 20A) to the second rotation center line (1321) of the second blade is less than a distance from the flow guide member (20, 20A) to the first rotation center line (1311) of the first blade.

6. The mower (100, 100B) of claim 1, wherein a width W1 of the connecting region (153, 153A) is greater than or equal to 50 mm and less than or equal to 150 mm.

7. The mower (100, 100B) of claim 1, wherein an included angle α between the flow guide member (20, 20A) and a grass discharge path of the grass outlet (171) is greater than or equal to 90 degrees, and the grass discharge path is an extension direction of a sidewall of the grass outlet.

8. The mower (100, 100B) of claim 1, wherein the grass outlet is located on a side of the cutting chamber (150, 150A) where the second blade is disposed.

9. The mower (100, 100B) of claim 1, wherein the second blade is driven by a second electric motor to rotate in the first direction.

10. The mower (100, 100B) of claim 9, wherein the second electric motor and the first electric motor are not coaxially arranged.

11. The mower (100, 100B) of claim 10, wherein the second blade is driven by the second electric motor to rotate in the first direction to generate a second airflow (42, 42A) that drives grass clippings to flow toward the grass outlet, and the second airflow (42, 42A) flows toward the grass outlet through the second flow path (46, 46A).

12. The mower (100, 100B) of claim 1, wherein the mower (100, 100B) is a push mower (100) or a riding mower (100B).

## Patentansprüche

1. Ein Mäher (100, 100B), umfassend:
einen Laufradsatz (30), der eine Mehrzahl von Laufrädern umfasst, die eine Stützebene bilden, wobei der Laufradsatz dazu ausgebildet ist, den Mäher (100, 100B) zu stützen, damit er auf einem Boden fährt;
ein Mähdeck (15, 15A) mit einer nach unten offenen Schneidkammer (150, 150A), wobei die Schneidkammer (150, 150A) mit zumindest einem Grasauslass (171) ausgebildet ist; und
eine Schneidanordnung (13), die zumindest teilweise in der Schneidkammer (150, 150A) aufgenommen ist und ein erstes Messer (131) und ein zweites Messer (132) umfasst, die entlang einer Anordnungsrichtung benachbart angeordnet sind und dieselbe Drehrichtung aufweisen;
wobei das erste Messer durch einen ersten Elektromotor angetrieben wird, um sich in einer ersten Richtung zu drehen und einen ersten Luftstrom (41, 41A) zu erzeugen, der Grasschnitt antreibt, in Richtung des Grasauslasses zu strömen; **dadurch gekennzeichnet, dass**
ein Strömungsleitelement (20, 20A) in der Schneidkammer (150, 150A) vorgesehen und integral mit dem Mähdeck (15, 15A) ausgebildet oder abnehmbar an dem Mähdeck (15, 15A) angeordnet ist;
das Strömungsleitelement (20, 20A) in einer Erstreckungsrichtung des Strömungsleitelements (20, 20A) ein erstes Ende (23, 23A) nahe dem Grasauslass und ein zweites Ende (24, 24A) entfernt von dem Grasauslass aufweist, wobei ein Spalt zwischen dem zweiten Ende (24, 24A) und einem Rand des Mähdecks (15, 15A) angeordnet ist und einen Verbindungsbereich (153, 153A) bildet; wobei
der erste Luftstrom (41, 41A) einen ersten Teil (411, 411A) und einen zweiten Teil (412, 412A) umfasst, der erste Teil (411, 411A) durch einen ersten Strömungsweg (45, 45A), der auf einer ersten Seite des Strömungsleitelements (20, 20A) angeordnet ist, in Richtung des Grasauslasses strömt, und der zweite Teil (412, 412A) durch einen zweiten Strömungsweg (46, 46A), der auf einer zweiten Seite des Strömungsleitelements (20, 20A) angeordnet ist, in Richtung des Grasauslasses strömt.

2. Der Mäher (100, 100B) nach Anspruch 1, wobei das Strömungsleitelement (20, 20A) in einer Erstreckungsrichtung des Strömungsleitelements (20, 20A) ein dem Grasauslass zugewandtes erstes Ende (23, 23A) und ein von dem Grasauslass abgewandtes zweites Ende (24, 24A) aufweist, und das zweite Ende (24, 24A) in einem Schnittbereich des ersten Strömungswegs (45, 45A) und des zweiten Strömungswegs (46, 46A) angeordnet ist.

3. Der Mäher (100, 100B) nach Anspruch 1, wobei das Strömungsleitelement (20, 20A) zwischen einer ersten Rotationsmittellinie (1311) des ersten Messers und einer zweiten Rotationsmittellinie (1321) des zweiten Messers angeordnet ist.

4. Der Mäher (100, 100B) nach Anspruch 3, wobei das Strömungsleitelement (20, 20A) in einer Erstreckungsrichtung des Strömungsleitelements (20, 20A) ein erstes Ende (23, 23A) nahe dem Grasauslass und ein zweites Ende (24, 24A) entfernt von dem Grasauslass aufweist, das erste Ende (23, 23A) und das zweite Ende (24, 24A) jeweils auf zwei Seiten einer ersten Ebene (111) angeordnet sind, und die erste Ebene (111) als eine Ebene definiert ist, die durch die erste Rotationsmittellinie (1311) des ersten Messers und die zweite Rotationsmittellinie (1321) des zweiten Messers verläuft und senkrecht zu der Stützebene ist.

5. Der Mäher (100, 100B) nach Anspruch 3, wobei ein Abstand von dem Strömungsleitelement (20, 20A) zu der zweiten Rotationsmittellinie (1321) des zweiten Messers kleiner ist als ein Abstand von dem Strömungsleitelement (20, 20A) zu der ersten Rotationsmittellinie (1311) des ersten Messers.

6. Der Mäher (100, 100B) nach Anspruch 1, wobei eine Breite W1 des Verbindungsbereichs (153, 153A) größer als oder gleich 50 mm und kleiner als oder gleich 150 mm ist.

7. Der Mäher (100, 100B) nach Anspruch 1, wobei ein eingeschlossener Winkel α zwischen dem Strömungsleitelement (20, 20A) und einem Grasauslasspfad des Grasauslasses (171) größer als oder gleich 90 Grad ist, und der Grasauslasspfad eine Erstreckungsrichtung einer Seitenwand des Grasauslasses ist.

8. Der Mäher (100, 100B) nach Anspruch 1, wobei der Grasauslass auf einer Seite der Schneidkammer (150, 150A) angeordnet ist, auf der das zweite Messer angeordnet ist.

9. Der Mäher (100, 100B) nach Anspruch 1, wobei das zweite Messer durch einen zweiten Elektromotor angetrieben wird, um sich in der ersten Richtung zu drehen.

10. Der Mäher (100, 100B) nach Anspruch 9, wobei der zweite Elektromotor und der erste Elektromotor nicht koaxial angeordnet sind.

11. Der Mäher (100, 100B) nach Anspruch 10, wobei das zweite Messer durch den zweiten Elektromotor angetrieben wird, um sich in der ersten Richtung zu drehen und einen zweiten Luftstrom (42, 42A) zu erzeugen, der Grasschnitt antreibt, in Richtung des Grasauslasses zu strömen, und der zweite Luftstrom (42, 42A) durch den zweiten Strömungsweg (46, 46A) in Richtung des Grasauslasses strömt.

12. Der Mäher (100, 100B) nach Anspruch 1, wobei der Mäher (100, 100B) ein Schiebemäher (100) oder ein Aufsitzmäher (100B) ist.

## Revendications

1. Une tondeuse (100, 100B), comprenant :
un ensemble de roues de déplacement (30) comprenant une pluralité de roues de déplacement formant un plan de support, dans lequel l'ensemble de roues de déplacement est configuré pour supporter la tondeuse (100, 100B) afin qu'elle se déplace sur un sol ;
un plateau de coupe (15, 15A) ayant une chambre de coupe (150, 150A) ouverte vers le bas, dans lequel la chambre de coupe (150, 150A) est formée avec au moins une sortie d'herbe (171) ; et
un ensemble de coupe (13) logé au moins partiellement dans la chambre de coupe (150, 150A) et comprenant une première lame (131) et une deuxième lame (132) qui sont disposées de manière adjacente selon une direction d'agencement et ont une même direction de rotation ;
dans lequel la première lame est entraînée par un premier moteur électrique pour tourner dans une première direction afin de générer un premier flux d'air (41, 41A) qui entraîne des débris d'herbe à s'écouler vers la sortie d'herbe ; **caractérisé en ce que**
un élément de guidage d'écoulement (20, 20A) est prévu dans la chambre de coupe (150, 150A) et est formé intégralement avec le plateau de coupe (15, 15A) ou agencé de manière amovible sur le plateau de coupe (15, 15A) ;
l'élément de guidage d'écoulement (20, 20A) présente une première extrémité (23, 23A) proche de la sortie d'herbe et une deuxième extrémité (24, 24A) éloignée de la sortie d'herbe dans une direction d'extension de l'élément de guidage d'écoulement (20, 20A), dans lequel un espace est ménagé entre la deuxième extrémité (24, 24A) et un bord du plateau de coupe (15, 15A), formant une région de connexion (153, 153A) ; de sorte que
le premier flux d'air (41, 41A) comprend une première partie (411, 411A) et une deuxième partie (412, 412A), la première partie (411, 411A) s'écoule vers la sortie d'herbe à travers un premier chemin d'écoulement (45, 45A) situé sur un premier côté de l'élément de guidage d'écoulement (20, 20A), et la deuxième partie (412, 412A) s'écoule vers la sortie d'herbe à travers un deuxième chemin d'écoulement (46, 46A) situé sur un deuxième côté de l'élément de guidage d'écoulement (20, 20A).

2. La tondeuse (100, 100B) selon la revendication 1, dans laquelle l'élément de guidage d'écoulement (20, 20A) présente une première extrémité (23, 23A) orientée vers la sortie d'herbe et une deuxième extrémité (24, 24A) orientée à l'opposé de la sortie d'herbe dans une direction d'extension de l'élément de guidage d'écoulement (20, 20A), et la deuxième extrémité (24, 24A) est située dans une région d'intersection du premier chemin d'écoulement (45, 45A) et du deuxième chemin d'écoulement (46, 46A).

3. La tondeuse (100, 100B) selon la revendication 1, dans laquelle l'élément de guidage d'écoulement (20, 20A) est disposé entre une première ligne centrale de rotation (1311) de la première lame et une deuxième ligne centrale de rotation (1321) de la deuxième lame.

4. La tondeuse (100, 100B) selon la revendication 3, dans laquelle l'élément de guidage d'écoulement (20, 20A) présente une première extrémité (23, 23A) proche de la sortie d'herbe et une deuxième extrémité (24, 24A) éloignée de la sortie d'herbe dans une direction d'extension de l'élément de guidage d'écoulement (20, 20A), la première extrémité (23, 23A) et la deuxième extrémité (24, 24A) étant situées respectivement sur deux côtés d'un premier plan (111), et le premier plan (111) étant défini comme un plan qui passe par la première ligne centrale de rotation (1311) de la première lame et la deuxième ligne centrale de rotation (1321) de la deuxième lame et qui est perpendiculaire au plan de support.

5. La tondeuse (100, 100B) selon la revendication 3, dans laquelle une distance entre l'élément de guidage d'écoulement (20, 20A) et la deuxième ligne centrale de rotation (1321) de la deuxième lame est inférieure à une distance entre l'élément de guidage d'écoulement (20, 20A) et la première ligne centrale de rotation (1311) de la première lame.

6. La tondeuse (100, 100B) selon la revendication 1, dans laquelle une largeur W1 de la région de connexion (153, 153A) est supérieure ou égale à 50 mm et inférieure ou égale à 150 mm.

7. La tondeuse (100, 100B) selon la revendication 1, dans laquelle un angle inclus α entre l'élément de guidage d'écoulement (20, 20A) et un chemin de sortie d'herbe de la sortie d'herbe (171) est supérieur ou égal à 90 degrés, et le chemin de sortie d'herbe est une direction d'extension d'une paroi latérale de la sortie d'herbe.

8. La tondeuse (100, 100B) selon la revendication 1, dans laquelle la sortie d'herbe est située sur un côté de la chambre de coupe (150, 150A) où la deuxième lame est disposée.

9. La tondeuse (100, 100B) selon la revendication 1, dans laquelle la deuxième lame est entraînée par un deuxième moteur électrique pour tourner dans la première direction.

10. La tondeuse (100, 100B) selon la revendication 9, dans laquelle le deuxième moteur électrique et le premier moteur électrique ne sont pas disposés coaxialement.

11. La tondeuse (100, 100B)selon la revendication 10, dans laquelle la deuxième lame est entraînée par le deuxième moteur électrique pour tourner dans la première direction afin de générer un deuxième flux d'air (42, 42A) qui entraîne des débris d'herbe à s'écouler vers la sortie d'herbe, et le deuxième flux d'air (42, 42A) s'écoule vers la sortie d'herbe à travers le deuxième chemin d'écoulement (46, 46A).

12. La tondeuse (100, 100B) selon la revendication 1, dans laquelle la tondeuse (100, 100B) est une tondeuse poussée (100) ou une tondeuse autoportée (100B).
